# EUROPÄISCHE PATENTSCHRIFT

(11) **EP 3 673 343 B1**
(45) Veröffentlichungstag und Bekanntmachung des Hinweises auf die Patenterteilung: **03.05.2023**
(21) Anmeldenummer: 19710402.9
(22) Anmeldetag: 11.03.2019
(51) Int. Cl.: G06F 1/28, G05F 1/569

(54) **SCHUTZSCHALTUNG, BETRIEBSVERFAHREN FÜR EINE SCHUTZSCHALTUNG UND COMPUTERSYSTEM**
PROTECTION CIRCUIT, OPERATING METHOD FOR A PROTECTION CIRCUIT, AND COMPUTER SYSTEM
CIRCUIT DE PROTECTION, PROCÉDÉ DE FONCTIONNEMENT POUR UN CIRCUIT DE PROTECTION ET SYSTÈME INFORMATIQUE

(30) Priorität: 25.04.2018 DE 102018109979
(43) Veröffentlichungstag der Anmeldung: 01.07.2020
(73) Patentinhaber: Fujitsu Technology Solutions GmbH, 80807 München (DE)
(72) Erfinder: HÄUSSERMANN, Rudolf, 80807 München (DE); STAUDE, Rainer, 80807 München (DE)
(74) Vertreter: Epping - Hermann - Fischer
(86) Internationale Anmeldenummer: PCT/EP2019/055998
(87) Internationale Veröffentlichungsnummer: WO 2019/206509

(56) Entgegenhaltungen:
- DE-T2- 60 211 092
- US-A- 4 536 699
- US-A1- 2011 075 308

## Beschreibung

Die vorliegende Erfindung betrifft eine Schutzschaltung umfassend einen Eingang zum Bereitstellen einer ersten Versorgungsspannung und einen Spannungsregler zum Bereitstellen einer zweiten Versorgungspannung basierend auf der ersten Versorgungsspannung.

Spannungsregler werden beispielsweise in Computersystemen dazu verwendet, eine von einem Computernetzteil bereitgestellte erste Versorgungsspannung in eine geregelte zweite Versorgungsspannung umzuwandeln, mit der Komponenten der Computersysteme, wie beispielsweise Prozessoren, versorgt werden. Derartige Spannungsregler sind beispielsweise auf Systemplatinen solcher Computersysteme angebracht.

Bei einer Fehlfunktion eines derartigen Spannungsreglers, beispielsweise bei einem Produktionsfehler des Spannungsreglers oder der Systemplatine, einer Fehlfunktion des Prozessors, oder Beschädigungen des Spannungsreglers ist es möglich, dass die Systemplatine eines Computersystems, auf dem der Spannungsregler angebracht ist, zerstört wird. Hierbei tritt nicht selten eine Überhitzung des Spannungsreglers oder der Systemplatine auf, was zu einer Rauchentwicklung oder gar einem Brand in dem Computersystem führen kann.

Die US 2011/0075308 A1 offenbart ein System zum Schutz vor Kurzschlüssen. Das System weist eine Versorgungsschaltung und einen in Reihe geschalteten Schalter auf. Die Versorgungsschaltung hat einen Versorgungseingang und einen Versorgungsausgang und ist so konfiguriert, dass sie einen Ausgangsstrom am Versorgungsausgang liefert und den Versorgungsausgang abschaltet, wenn der Ausgangsstrom eine erste Stromgrenze überschreitet. Der in Reihe geschaltete Schalter ist zwischen den Versorgungsausgang der Versorgungsschaltung und einen Versorgungsknoten geschaltet, und der Versorgungsknoten ist so konfiguriert, dass er mit einer Last gekoppelt ist. Eine Stromversorgung wird hier abgeschaltet, wenn eine Impedanz zwischen einem Eingang und einem Ausgang der Versorgungsschaltung zu groß wird.

Eine Aufgabe der vorliegenden Erfindung ist es, eine Vorrichtung und ein Verfahren zu beschreiben, die
das oben genannte Problem lösen oder mindern.

Gemäß einem ersten Aspekt wird die oben genannte Aufgabe durch eine Schutzschaltung gelöst. Die Schutzschaltung umfasst einen Eingang zum Bereitstellen einer ersten Versorgungsspannung und einen Spannungsregler zum Bereitstellen einer zweiten Versorgungspannung basierend auf der ersten Versorgungsspannung. Die Schutzschaltung umfasst des Weiteren eine Messvorrichtung zur Bestimmung einer Impedanz des Spannungsreglers und ein selbstsperrendes Schaltelement, welches dazu eingerichtet ist, die erste Versorgungsspannung mit dem Spannungsregler zu verbinden, wenn eine Impedanz des Spannungsreglers einen vorbestimmten Impedanzwert überschreitet.

Ein Vorteil hierbei ist es, dass die erste Versorgungsspannung lediglich dann vollständig an den Spannungsregler angelegt wird, wenn ein Kurzschluss sowie eine sonstige Fehlfunktionen des Spannungsreglers, welche eine niedrigere Impedanz als einen bekannten Sollwert der Impedanz zur Folge hätten, ausgeschlossen ist. Auf diese Weise wird ein Anlegen der am Eingang bereitgestellten ersten Versorgungsspannung an einen defekten Spannungsregler verhindert. Somit kann es nicht passieren, dass bei einem Anlegen der ersten Versorgungsspannung an einen defekten Spannungsregler beispielsweise die oben genannten Probleme auftreten. Bei der hier beschriebenen Schutzschaltung wird ein Schutz des Spannungsreglers und der Systemplatine unmittelbar nach einem Bereitstellen der ersten Versorgungsspannung an dem Eingang der Schutzschaltung gewährleistet.

Gemäß dem ersten Aspekt umfasst die Messvorrichtung einen Testwiderstand, der das Schaltelement überbrückt, sodass der Testwiderstand und der Spannungsregler einen Spannungsteiler bilden. Ein Vorteil hierbei ist es, dass die Schutzschaltung keine zusätzliche Spannungsversorgung zur Bestimmung der Impedanz des Spannungsreglers benötigt. Bei einem Verbinden des Eingangs zum Bereitstellen der ersten Versorgungsspannung mit einer Spannungsquelle wird über den Testwiderstand ein Teststrom in die Schutzschaltung eingespeist, während das Schaltelement sperrt. Der Teststrom wird dazu verwendet, die Impedanz des Spannungsreglers zu bestimmen.

Gemäß dem ersten Aspekt umfasst die Messvorrichtung ferner einen Komparator der dazu eingerichtet ist, eine Testspannung an einem Knotenpunkt zwischen dem Testwiderstand und dem Spannungsregler mit einer Referenzspannung zu vergleichen und an einem Ausgang des Komparators ein Steuersignal für das Schaltelement bereitzustellen, wenn die Testspannung die Referenzspannung übersteigt. Ein Vorteil hierbei ist es, dass selbst geringe Abweichungen der gemessenen Impedanz des Spannungsreglers von einem Sollwert der Impedanz des Spannungsreglers registriert werden können.

Gemäß einem zweiten Aspekt wird die oben genannte Aufgabe durch ein Betriebsverfahren für eine Schutzschaltung umfassend einen Eingang zum Bereitstellen einer ersten Versorgungsspannung, einen Spannungsregler zum Bereitstellen einer zweiten Versorgungsspannung basierend auf der ersten Versorgungsspannung, eine Messvorrichtung zur Bestimmung einer Impedanz des Spannungsreglers und ein selbstsperrendes Schaltelement gelöst. Die Messvorrichtung umfasst einen Testwiderstand, der das Schaltelement überbrückt, sodass der Testwiderstand und der Spannungsregler einen Spannungsteiler bilden. Die Messvorrichtung umfasst ferner einen Komparator. Das Betriebsverfahren umfasst die Schritte:
- Messen einer Impedanz des Spannungsreglers, wobei das Messen der Impedanz ein Einspeisen eines Teststroms an dem Eingang der Schutzschaltung über den Testwiderstand umfasst, und wobei das Messen der Impedanz des Spannungsreglers ferner folgendes Umfasst: Vergleichen einer sich an einem Knotenpunkt zwischen dem Testwiderstand und dem Spannungsregler einstellenden Testspannung mit einer Referenzspannung, und
- Schließen des Schaltelements, wenn die gemessene Impedanz einen vorbestimmten Impedanzwert überschreitet, sodass der Spannungsregler mit der ersten Versorgungsspannung verbunden wird, indem an einem Ausgang des Komparators ein Steuersignal für das Schaltelement bereitgestellt wird, wenn die Testspannung die Referenzspannung übersteigt.

In wenigstens einer Ausgestaltung erfolgt das Messen der Impedanz des Spannungsreglers unmittelbar nach einem Bereitstellen der ersten Versorgungsspannung an dem Eingang der Schutzschaltung. Ein Vorteil hierbei ist es, dass bereits unmittelbar nach einem Aufbauen der ersten Versorgungsspannung an dem Eingang der Schutzschaltung die Impedanz des Spannungsreglers gemessen werden kann. Auf diese Weise werden keine oder nur unwesentliche Zeitverzögerungen während einem Einschaltprozess eines Geräts, in dem die Schutzschaltung verbaut ist, durch das Betriebsverfahren für die Schutzschaltung bewirkt.

Gemäß einem dritten Aspekt wird die oben genannte Aufgabe durch ein Computersystem umfassend ein Computernetzteil und eine Systemplatine mit einer Schutzschaltung gemäß dem ersten Aspekt gelöst. Das Computernetzteil stellt die erste Versorgungsspannung an dem Eingang der Schutzschaltung bereit.

Weitere vorteilhafte Ausgestaltungen sind in den angehängten Ansprüchen sowie der nachfolgenden Beschreibung von Ausführungsbeispielen beschrieben. Die Ausführungsbeispiele werden anhand der angehängten Figuren beschrieben. In den Figuren werden für Elemente mit im Wesentlichen gleicher Funktion gleiche Bezugszeichen verwendet, diese Elemente müssen jedoch nicht in allen Einzelheiten identisch sein.

In den Figuren zeigen:
- Figur 1: eine schematische Darstellung einer Anordnung mit einer Schutzschaltung gemäß einer Ausgestaltung der Erfindung,
- Figur 2: eine schematische Darstellung von Spannungsverläufen in der Anordnung gemäß Figur 1 während eines Einschaltvorgangs in einem Normalfall, und
- Figur 3: eine schematische Darstellung von Spannungsverläufen in der Anordnung gemäß Figur 1 während eines Einschaltvorgangs in einem Fehlerfall.

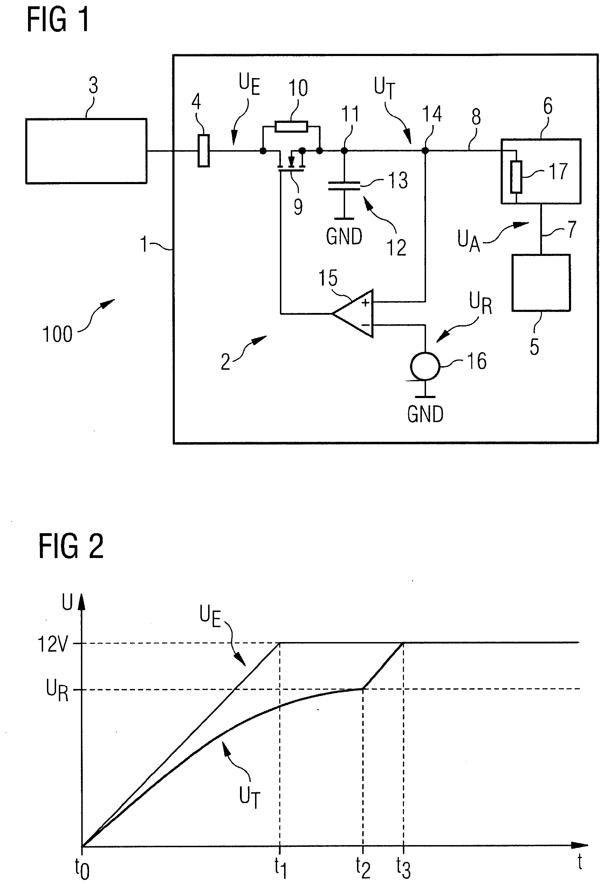

Figur 1 zeigt eine schematische Darstellung einer Anordnung 100 bestehend aus einer Systemplatine 1 mit einer Schutzschaltung 2 gemäß einer Ausgestaltung der Erfindung und einem Computernetzteil 3. In diesem Ausführungsbeispiel ist die Systemplatine 1 ein Motherboard eines Computersystems. Das Computernetzteil 3 ist elektrisch mit der Systemplatine 1 verbunden. Das Computernetzteil 3 ist beispielsweise ein internes Netzteil, wie beispielsweise bei einem Desktop-Computer, oder ein externes Netzteil, wie beispielsweise bei einem Laptop oder Tablet-Computer.

Auf der Systemplatine 1 ist ein Eingang 4 zum Bereitstellen einer ersten Versorgungsspannung U_{E} angeordnet. Das Computernetzteil 3 ist an den Eingang 4 angeschlossen und stellt die erste Versorgungsspannung U_{E} an dem Eingang 4 bereit. Des Weiteren ist auf der Systemplatine 1 ein Prozessor 5 und ein Spannungsregler 6 angeordnet. Der Spannungsregler 6 ist mit dem Prozessor 5 über eine erste elektrische Leitung 7 verbunden und stellt eine zweite Versorgungsspannung U_{A}, in diesem Fall eine geregelte Kernspannung für den Prozessor 5, bereit. Die erste Versorgungsspannung U_{E}, die an dem Eingang 4 bereitgestellt wird, beträgt in diesem Ausführungsbeispiel 12 V.

Der Eingang 4 ist mit dem Spannungsregler 6 über eine zweite elektrische Leitung 8 verbunden. In der zweiten elektrischen Leitung 8 ist ein selbstsperrender Metall-Oxid-Halbleiter-Feldeffekttransistor, MOSFET, 9 angeordnet. Der selbstsperrende MOSFET 9 unterbricht einen Stromfluss in der zweiten elektrischen Leitung 8, wenn keine Steuerspannung an einer Steuerelektrode des MOSFET 9 anliegt.

Die Schutzschaltung 2 umfasst des Weiteren einen Testwiderstand 10, der den MOSFET 9 überbrückt. MOSFET 9 und Testwiderstand 10 sind parallel zueinander geschaltet. Die Parallelschaltung aus Testwiderstand 10 und MOSFET 9 ist mit dem Spannungsregler 6 in Reihe geschaltet, sodass Testwiderstand 10 und Spannungsregler 6 bei sperrendem MOSFET 9 einen Spannungsteiler bilden.

An einem ersten Knotenpunkt 11 zwischen dem Spannungsregler 6 und der Parallelschaltung aus Testwiderstand 10 und MOSFET 9 ist ferner ein Tiefpassfilter 12 an die zweite elektrische Leitung 8 angeschlossen. Der Tiefpassfilter 12 weist einen Kondensator 13 auf, der zwischen den ersten Knotenpunkt 11 und ein Massepotential GND geschaltet ist. Der Tiefpassfilter 12 filtert von dem Spannungsregler 6 erzeugte Störungen, sodass diese nicht auf die am Eingang 4 bereitgestellte erste Versorgungsspannung U_{E} übertragen werden.

Des Weiteren ist in der zweiten elektrischen Leitung 8 zwischen dem Spannungsregler 6 und der Parallelschaltung aus Testwiderstand 10 und MOSFET 9 ein zweiter Knotenpunkt 14 angeordnet, der mit einem positiven Eingang eines Komparators 15 elektrisch verbunden ist. An einem negativen Eingang des Komparators 15 ist eine Referenzspannung U_{R} angelegt, die von einer Referenzspannungsquelle 16 bereitgestellt wird. Die Referenzspannung U_{R} ist beispielsweise eine interne Referenzspannung eines Mikrokontrollers. Beispielsweise wird die Referenzspannung U_{R} durch einen Spannungsteiler mit einer Zener-Diode aus der ersten Versorgungsspannung U_{E} erzeugt. Ein Ausgang des Komparators 15 ist mit der Steuerelektrode des MOSFETs 9 verbunden.

In dem Spannungsregler 6 ist ein Widerstand 17 eingezeichnet. Dieser Widerstand 17 stellt kein explizites Bauteil in der Schutzschaltung 2 dar, sondern symbolisiert eine Impedanz des Spannungsreglers 6.

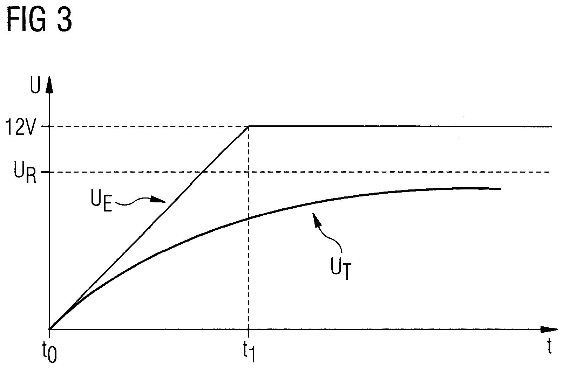

Eine Funktionsweise der Schutzschaltung 2 wird anhand der Figuren 2 und 3 detailliert beschrieben.

Die Figuren 2 und 3 zeigen jeweils schematische Darstellungen von Spannungsverläufen der ersten Versorgungsspannung U_{E} und einer an dem zweiten Knotenpunkt 14 abgegriffenen Testspannung U_{T}, die von dem Komparator 15 mit der Referenzspannung U_{R} verglichen wird. Die Spannungsverläufe sind jeweils während Einschaltvorgängen der Anordnung 100 gemäß Figur 1 über der Zeit dargestellt. Figur 2 zeigt die Spannungsverläufe in einem Normalfall, bei dem der Spannungsregler 6 auf der Systemplatine 1 keinen Defekt aufweist. Figur 3 zeigt die Spannungsverläufe in einem Fehlerfall, bei dem der Spannungsregler 6 auf der Systemplatine 1 einen Defekt aufweist.

Gemäß Figur 2 wird zu einem Zeitpunkt t₀ das Computernetzteil 3 der Anordnung 100 eingeschaltet. Die von dem Computernetzteil 3 an dem Eingang 4 bereitgestellte erste Versorgungsspannung U_{E} steigt kontinuierlich bis zu einem Zeitpunkt t₁ auf einen Wert von 12 V an. Die 12 V stellen einen Sollwert der ersten Versorgungsspannung U_{E} dar. Der selbstsperrende MOSFET 9 sperrt zu diesen Zeitpunkten t₀, t₁, sodass ein Strom in der zweiten elektrischen Leitung 8 nur über den Testwiderstand 10 fließen kann. Testwiderstand 10 und Spannungsregler 6 bilden einen Spannungsteiler, sodass sich an dem zweiten Knotenpunkt 14 ein von der Impedanz des Spannungsreglers 6 und einem Widerstandswert des Testwiderstands 10 abhängiger Spannungswert für die Testspannung U_{T} einstellt.

Der Komparator 15 vergleicht die Testspannung U_{T} mit der Referenzspannung U_{R} und registriert gemäß Figur 2 zum Zeitpunkt t₂ einen Anstieg der Testspannung U_{T} über die Referenzspannung U_{R}. Dies signalisiert, dass in dem Spannungsregler 6 keine Defekte vorliegen die zu einer zu geringen Impedanz des Spannungsreglers 6 führen. Daraufhin gibt der Komparator 15 an seinem Ausgang ein Steuersignal aus, welches den MOSFET 9 von sperrend zu leitend schaltet. Der MOSFET 9 verbindet somit den Eingang 4 mit dem Spannungsregler 6, sodass ein Strom in der zweiten elektrischen Leitung 8 über den MOSFET 9 fließt und der Testwiderstand 10 überbrückt wird.

Bis zu dem Zeitpunkt t₃ steigt somit auch die an dem zweiten Knotenpunkt 14 angelegte Testspannung U_{T} auf 12 V an. Ab dem Zeitpunkt t₃ sind Testspannung U_{T} und erste Versorgungsspannung U_{E} gleich, da Spannungsverluste an dem MOSFET 9 in der schematischen Darstellung der Spannungsverläufe vernachlässigt wurden. Ab dem Zeitpunkt t₃ wird der Spannungsregler 6 mit der benötigten Spannung durch die erste Versorgungsspannung U_{E} versorgt.

Gemäß Figur 3 wird ebenfalls zu einem Zeitpunkt t₀ das Computernetzteil 3 der Anordnung 100 eingeschaltet. Die erste Versorgungsspannung U_{E} steigt auch hier kontinuierlich bis zu einem Zeitpunkt t₁ auf einen Wert von 12 V an. Der selbstsperrende MOSFET 9 sperrt zu diesen Zeitpunkten t₀, t₁, sodass ein Strom in die zweite elektrische Leitung 8 nur über den Testwiderstand 10 fließen kann.

Gemäß Figur 3 weist der Spannungsregler 6 jedoch einen Defekt auf, sodass die Testspannung U_{T} an dem zweiten Kontenpunkt 14 den Wert der Referenzspannung U_{R} nicht erreicht. Die Impedanz des Spannungsreglers 6 ist zu gering. Eine zu geringe Impedanz des Spannungsreglers 6 könnte eine Beschädigung der Systemplatine 1 zur Folge haben, wenn die vollständige erste Versorgungsspannung U_{E} in Höhe von 12 V an den Spannungsregler 6 angelegt wird. Da die Testspannung U_{T} gemäß Figur 3 kleiner bleibt als die Referenzspannung U_{R} wird an dem Ausgang des Komparators 15 kein Steuersignal bereitgestellt, sodass der MOSFET 9 in sperrendem Zustand verbleibt. In diesem Fall, also einem Fehlerfall, wird nicht die volle erste Versorgungsspannung U_{E} von 12 V an den Spannungsregler 6 angelegt, was eine Beschädigung der Systemplatine 1 aufgrund defekter Halbleiterelemente in dem Spannungsregler 6 verhindert.

In dem hier gezeigten Ausführungsbeispiel ist ein Widerstandswert des Testwiderstands 10 von 825 Ω gewählt. Außerdem ist ein Spannungswert für die Referenzspannung U_{R} von 8,7 V gewählt. Die Referenzspannung U_{R} ist so gewählt, dass sie knapp unter dem Wert liegt, der sich bei einem fehlerfreien Spannungsregler 6 und sperrendem MOSFET 9 an dem zweiten Knotenpunkt 14 einstellt. Der hier gewählte Widerstandswert des Testwiderstands 10 gewährleistet eine zuverlässige Bestimmung der Impedanz des Spannungsreglers 6, ohne dass ein zu hoher Teststrom in die zweite elektrische Leitung 8 über den Testwiderstand 10 eingespeist wird, was bei einem defekten Spannungsregler 6 zu den eingangs genannten Problemen führen könnte. Der Widerstandswert des Testwiderstands 10 ist somit ferner so groß, dass bei leitendem MOSFET 9 praktisch kein Strom mehr durch den Testwiderstand 10 fließt.

In diesem Ausführungsbeispiel, das heißt bei einer gewählten Referenzspannung U_{R} von 8,7 V und einem Testwiderstand 10 von 825 Ω ist bereits ein Leckstrom von 4 mA in dem Spannungsregler 6 als Defekt des Spannungsreglers 6 registrierbar. Bei einem Leckstrom von 4 mA in dem Spannungsregler 6 übersteigt die Testspannung U_{T} die Referenzspannung U_{R} nicht, sodass der MOSFET 9 nicht von sperrend zu leitend geschaltet wird. Beispielsweise eine Schmelzsicherung könnte bei vergleichsweise nah zusammenliegenden Werten eines Stroms durch den Spannungsregler 6 im Normalfall und eines Stroms durch den Spannungsregler 6 im Fehlerfall nicht sowohl einen zuverlässigen Betrieb als auch ein schnelles Auslösen der Sicherung gewährleisten.

Die hierin beschriebene Schutzschaltung 2 gewährleistet einen Schutz der Systemplatine 1 während einem Zeitraum von einem Einschalten des Computernetzteils 3 bis zu einer Überprüfung der Impedanz des Spannungsreglers 6. Andere Schutzvorrichtungen, beispielsweise eine Überstromschutzeinrichtung des Computernetzteils 3 oder Überwachungsschaltungen in dem Spannungsregler 6 selbst, sind unmittelbar nach dem Bereitstellen der ersten Versorgungsspannung U_{E} an dem Eingang 4, beispielsweise für etwa 20 ms bis 100 ms, gewöhnlich nicht aktiv.

In einem alternativen Ausführungsbeispiel ist eine hier beschriebene Schutzschaltung auf einer Systemplatine eines Laptop oder Tablet-Computers angeordnet, wobei die erste Versorgungsspannung von einem Akku des Laptops oder Tablet-Computers bereitgestellt wird. In diesem Fall stellt die Schutzschaltung zusätzlich zum Schutz der Systemplatine auch einen Schutz des Akkus dar.

### Bezugszeichenliste

- 1: Systemplatine
- 2: Schutzschaltung
- 3: Computernetzteil
- 4: Eingang
- 5: Prozessor
- 6: Spannungsregler
- 7: erste elektrische Leitung
- 8: zweite elektrische Leitung
- 9: MOSFET
- 10: Testwiderstand
- 11: erster Knotenpunkt
- 12: Tiefpassfilter
- 13: Kondensator
- 14: zweiter Knotenpunkt
- 15: Komparator
- 16: Referenzspannungsquelle
- 17: Widerstand
- 100: Anordnung

- GND: Massepotential
- U_{E}: erste Versorgungsspannung
- U_{A}: zweite Versorgungsspannung
- U_{R}: Referenzspannung
- U_{T}: Testspannung

- t₀, t₁, t₂, t₃: Zeitpunkt

## Patentansprüche

1. Schutzschaltung (2) umfassend einen Eingang (4) zum Bereitstellen einer ersten Versorgungsspannung (U_{E}), einen Spannungsregler (6) zum Bereitstellen einer zweiten Versorgungsspannung (U_{A}) basierend auf der ersten Versorgungsspannung (U_{E}), eine Messvorrichtung zur Bestimmung einer Impedanz des Spannungsreglers (6) und ein selbstsperrendes Schaltelement, welches dazu eingerichtet ist, die erste Versorgungsspannung (U_{E}) mit dem Spannungsregler (6) zu verbinden, wenn eine Impedanz des Spannungsreglers (6) einen vorbestimmten Impedanzwert überschreitet, wobei die Messvorrichtung einen Testwiderstand (10) umfasst, der das Schaltelement überbrückt, sodass der Testwiderstand (10) und der Spannungsregler (6) einen Spannungsteiler bilden, und die Messvorrichtung ferner einen Komparator (15) umfasst, der dazu eingerichtet ist eine Testspannung (U_{T}) an einem Knotenpunkt (14) zwischen dem Testwiderstand (10) und dem Spannungsregler (6) mit einer Referenzspannung (U_{R}) zu vergleichen und an einem Ausgang des Komparators (15) ein Steuersignal für das Schaltelement bereitzustellen, wenn die Testspannung (U_{T}) die Referenzspannung (U_{R}) übersteigt.

2. Schutzschaltung (2) gemäß Anspruch 1, wobei das Schaltelement ein elektrisches Halbleiter-Schaltelement, insbesondere einen Metall-Oxid-Halbleiter-Feldeffekttransistor, MOSFET, (9) umfasst.

3. Schutzschaltung (2) gemäß einem der Ansprüche 1 oder 2, wobei der Eingang (4) zum Bereitstellen der ersten Versorgungsspannung (U_{E}) dazu eingerichtet ist, an eine Spannungsschiene eines Computernetzteils (3) angeschlossen zu werden.

4. Betriebsverfahren für eine Schutzschaltung (2) umfassend einen Eingang (4) zum Bereitstellen einer ersten Versorgungsspannung (U_{E}), einen Spannungsregler (6) zum Bereitstellen einer zweiten Versorgungsspannung (U_{A}) basierend auf der ersten Versorgungsspannung (U_{E}), eine Messvorrichtung zur Bestimmung einer Impedanz des Spannungsreglers (6) und ein selbstsperrendes Schaltelement, wobei die Messvorrichtung einen Testwiderstand (10) umfasst, der das Schaltelement überbrückt, sodass der Testwiderstand (10) und der Spannungsregler (6) einen Spannungsteiler bilden, und die Messvorrichtung ferner einen Komparator (15) umfasst, das Betriebsverfahren umfassend die Schritte:
- Messen einer Impedanz des Spannungsreglers (6), wobei das Messen der Impedanz ein Einspeisen eines Teststroms an dem Eingang (4) der Schutzschaltung (2) über den Testwiderstand (10) umfasst, und wobei das Messen der Impedanz des Spannungsreglers (6) ferner folgendes Umfasst: Vergleichen einer sich an einem Knotenpunkt (14) zwischen dem Testwiderstand (10) und dem Spannungsregler (6) einstellenden Testspannung (U_{T}) mit einer Referenzspannung (U_{R}), und
- Schließen des Schaltelements, wenn die gemessene Impedanz einen vorbestimmten Impedanzwert überschreitet, sodass der Spannungsregler (6) mit der ersten Versorgungsspannung (U_{E}) verbunden wird, indem an einem Ausgang des Komparators (15) ein Steuersignal für das Schaltelement bereitgestellt wird, wenn die Testspannung (U_{T}) die Referenzspannung (U_{R}) übersteigt.

5. Betriebsverfahren gemäß Anspruch 4, wobei das Messen der Impedanz des Spannungsreglers (6) unmittelbar nach einem Bereitstellen der ersten Versorgungsspannung (U_{E}) an dem Eingang (4) der Schutzschaltung (2) erfolgt.

6. Computersystem umfassend ein Computernetzteil (3) und eine Systemplatine (1) mit einer Schutzschaltung (2) gemäß einem der Ansprüche 1 bis 3, wobei das Computernetzteil (3) die erste Versorgungsspannung (U_{E}) an dem Eingang (4) der Schutzschaltung (2) bereitstellt.

## Claims

1. A protective circuit (2) comprising an input (4) for providing a first supply voltage (U_{E}), a voltage regulator (6) for providing a second supply voltage (U_{A}) based on the first supply voltage (U_{E}), a measuring device for determining an impedance of the voltage regulator (6), and a self-locking switching element configured to connect the first supply voltage (U_{E}) with the voltage regulator (6) if an impedance of the voltage regulator (6) exceeds a predefined impedance value, wherein the measuring device comprises a test resistor (10) bridging the switching element so that the test resistor (10) and the voltage regulator (6) form a voltage divider, and the measuring device further comprises a comparator (15) which is configured to compare a test voltage (U_{T}) at a node (14) between the test resistor (10) and the voltage regulator (6) to a reference voltage (U_{R}) and to provide a control signal for the switching element at an output of the comparator (15) if the test voltage (U_{T}) exceeds the reference voltage (U_{R}).

2. The protective circuit (2) according to claim 1, wherein the switching element comprises an electrical semiconductor switching element, in particular a metal oxide semiconductor field effect transistor, MOSFET, (9).

3. The protective circuit (2) according to any one of claims 1 or 2, wherein the input (4) for providing the first supply voltage (U_{E}) is configured to be connected to a voltage rail of a computer power supply unit (3).

4. An operating method for a protective circuit (2) comprising an input (4) for providing a first supply voltage (U_{E}), a voltage regulator (6) for providing a second supply voltage (U_{A}) based on the first supply voltage (U_{E}), a measuring device for determining an impedance of the voltage regulator (6) and a self-locking switching element, wherein the measuring device comprises a test resistor (10) that bridges the switching element so that the test resistor (10) and the voltage regulator (6) form a voltage divider, and the measuring device further comprises a comparator (15), the operating method comprising the steps of:
- measuring an impedance of the voltage regulator (6), wherein measuring the impedance comprises supplying a test current at the input (4) of the protective circuit (2) via the test resistor (10), and wherein measuring the impedance of the voltage regulator (6) further comprises: comparing a test voltage (U_{T}) present at a node (14) between the test resistor (10) and the voltage regulator (6) with a reference voltage (U_{R}), and
- closing the switching element if the measured impedance exceeds a predefined impedance value so that the voltage regulator (6) is connected to the first supply voltage (U_{E}) by providing a control signal for the switching element at an output of the comparator (15) if the test voltage (U_{T}) exceeds the reference voltage (U_{R}).

5. The operating method according to claim 4, wherein measuring the impedance of the voltage regulator (6) is performed immediately after providing the first supply voltage (U_{E}) to the input (4) of the protective circuit (2).

6. A computer system comprising a computer power supply unit (3) and a system board (1) with a protective circuit (2) according to any one of claims 1 to 3, wherein the computer power supply unit (3) provides the first supply voltage (U_{E}) at the input (4) of the protective circuit (2).

## Revendications

1. Circuit de protection (2) comprenant une entrée (4) pour fournir une première tension d'alimentation (U_{E}), un régulateur de tension (6) pour fournir une deuxième tension d'alimentation (U_{A}) basée sur la première tension d'alimentation (U_{E}), un dispositif de mesure pour déterminer une impédance du régulateur de tension (6), et un élément de commutation autobloquant configuré pour connecter la première tension d'alimentation (U_{E}) avec le régulateur de tension (6) si une impédance du régulateur de tension (6) dépasse une valeur d'impédance prédéfinie, dans lequel l'appareil de mesure comprend une résistance de test (10) pontant l'élément de commutation de sorte que la résistance de test (10) et le régulateur de tension (6) forment un diviseur de tension, le dispositif de mesure comprenant en outre un comparateur (15) configuré pour comparer une tension de test (U_{T}) à un noeud (14) entre la résistance de test (10) et le régulateur de tension (6) à une tension de référence (U_{R}) et pour fournir un signal de commande pour l'élément de commutation à une sortie du comparateur (15) si la tension de test (U_{T}) dépasse la tension de référence (U_{R}).

2. Le circuit de protection (2) selon la revendication 1, dans lequel l'élément de commutation comprend un élément de commutation électrique à semi-conducteur, en particulier un transistor à effet de champ à grille métal-oxyde, MOSFET, (9) .

3. Le circuit de protection (2) selon l'une quelconque des revendications 1 ou 2, dans lequel l'entrée (4) pour fournir la première tension d'alimentation (U_{E}) est configurée pour être connectée à un rail de tension d'un bloc d'alimentation (3) d'ordinateur.

4. Procédé de fonctionnement d'un circuit de protection (2) comprenant une entrée (4) pour fournir une première tension d'alimentation (U_{E}), un régulateur de tension (6) pour fournir une deuxième tension d'alimentation (U_{A}) basée sur la première tension d'alimentation (U_{E}), un dispositif de mesure pour déterminer une impédance du régulateur de tension (6) et un élément de commutation autobloquant, dans lequel le dispositif de mesure comprend une résistance de test (10) qui ponte l'élément de commutation de sorte que la résistance de test (10) et le régulateur de tension (6) forment un diviseur de tension, et dans lequel le dispositif de mesure comprend en outre un comparateur (15), le procédé de fonctionnement comprenant les étapes suivantes :
- mesurer une impédance du régulateur de tension (6), la mesure de l'impédance comprenant le fournir d'un courant de test à l'entrée (4) du circuit de protection (2) via la résistance de test (10), et la mesure de l'impédance du régulateur de tension (6) comprenant en outre: comparer une tension de test (UT) présente à un noeud (14) entre la résistance de test (10) et le régulateur de tension (6) avec une tension de référence (UR), et
- si l'impédance mesurée dépasse une valeur d'impédance prédéfinie, fermer l'élément de commutation de sorte que le régulateur de tension (6) soit connecté à la première tension d'alimentation (U_{E}) en fournissant un signal de commande pour l'élément de commutation à une sortie du comparateur (15) si la tension de test (U_{T}) dépasse la tension de référence (U_{R}) .

5. Procédé de fonctionnement selon la revendication 4, dans lequel la mesure de l'impédance du régulateur de tension (6) est effectuée immédiatement après avoir fourni la première tension d'alimentation (U_{E}) à l'entrée (4) du circuit de protection (2).

6. Système informatique comprenant un bloc d'alimentation d'ordinateur (3) et une carte système (1) avec un circuit de protection (2) selon l'une quelconque des revendications 1 à 3, dans lequel le bloc d'alimentation d'ordinateur (3) fournit la première tension d'alimentation (UE) à l'entrée (4) du circuit de protection (2).
